# EUROPÄISCHE PATENTSCHRIFT

(11) **EP 1 684 062 B1**
(45) Veröffentlichungstag und Bekanntmachung des Hinweises auf die Patenterteilung: **30.09.2009**
(21) Anmeldenummer: 06001173.1
(22) Anmeldetag: 20.01.2006
(51) Int. Cl.: G01N 21/05, G01N 21/15, B41F 33/00, G01N 21/31

(54) **Verfahren und Vorrichtung zum Regeln der Konzentration von Komponenten von Additiven in einer Druck-Prozessflüssigkeit**
Device and method for regulating the concentration of components of additives in a printing process liquid
Procédé et dispositif destinés au réglage de la concentration de composants d'additifs dans un liquide de processus d'imprimerie

(30) Priorität: 24.01.2005 DE 102005003372
(43) Veröffentlichungstag der Anmeldung: 26.07.2006
(73) Patentinhaber: Krieg, Gunther, Prof.Dr.Ing., 76227 Karlsruhe (DE)
(72) Erfinder: Fey, Dirk, 67630 Neewiller (DE)

(56) Entgegenhaltungen:
- EP-A- 1 010 975
- DE-A- 19 849 847
- DE-A1- 4 106 313
- DE-A1- 10 333 625
- US-A- 2 819 402
- PATENT ABSTRACTS OF JAPAN Bd. 2000, Nr. 13, 5. Februar 2001 (2001-02-05) -& JP 2000 301698 A (TOPPAN PRINTING CO LTD), 31. Oktober 2000 (2000-10-31)
- PATENT ABSTRACTS OF JAPAN Bd. 2002, Nr. 08, 5. August 2002 (2002-08-05) -& JP 2002 107290 A (TOPPAN PRINTING CO LTD), 10. April 2002 (2002-04-10)
- PATENT ABSTRACTS OF JAPAN Bd. 2003, Nr. 04, 2. April 2003 (2003-04-02) -& JP 2002 350233 A (TOPPAN PRINTING CO LTD), 4. Dezember 2002 (2002-12-04)

## Beschreibung

Die Erfindung betrifft ein Verfahren zum Regeln der Konzentrationen von Komponenten von Additiven in einer Druck-Prozessflüssigkeit, wobei die Ist-Konzentrationen von Komponenten bestimmt werden und ein Nachdosieren von gemessenen Komponenten auf vorgegebene Soll-Konzentrationen erfolgt, sowie eine Vorrichtung zum Regeln der Konzentrationen von Komponenten von Additiven in einer Druck-Prozessflüssigkeit mit einer Messeinrichtung zum Messen der Konzentrationen zum mindestens eines Teils der Komponenten in der Prozessflüssigkeit, mit einem Regelkreis und mit einer Einrichtung zum Nachdosieren zumindest eines Teils der Komponenten.

Bei Offset-Druckmaschinen wird die jeweilige Druckplatte durch ein sogenanntes Feuchtwerk mit einer wässrigen Flüssigkeit benetzt, um zu erreichen, dass in einem nachfolgenden Prozessschritt die Bildbereiche die Farbe annehmen, während die bildfreien Bereiche farbabweisend sich verhalten. Die wässrige Flüssigkeit besteht neben Wasser häufig aus einem Gemisch mit Alkohol, meist wird Isopropanol verwendet, sowie einem chemischen Gemisch aus bis zu ca. zwanzig Substanzen, das im Folgenden als Additiv bezeichnet wird. Das Additiv wird in Konzentrationen von 1 bis 8 % -Vol., der Alkohol von 0,5 bis 20 % -Vol. zugesetzt. Die Konzentration des Wassers liegt demnach zwischen 72% und 98,5 % - Vol. Unter Verwendung von optimierten Additiven wird zum Teil gänzlich auf den Alkohol verzichtet. In diesem Fall wird das Additiv auch als Alkohol-Ersatzstoff bezeichnet. Das optimierte Additiv übernimmt dann voll oder zumindest teilweise die Funktion von Isopropanol. Additive enthalten im Wesentlichen die folgenden Substanzgruppen:
- Oberflächenaktive Stoffe, wie höhere Alkohole und Tenside, welche als - gegebenenfalls teilweise - Ersatz für Isopropanol, insbesondere die dynamische Oberflächenspannung reduzieren,
- Puffer, insbesondere Phosphat- und Zitratpuffer, die den pH-Wert des Feuchtwassers auf einem konstanten Wert im Bereich von 4,8 bis 5,3 halten,
- Netzmittel, wie z.B. Glyzerin, die eine Hydrophilierung der Druckplatten bewirken,
- Antioxidantien als Korrosionsschutzmittel, Glykole und Glykolether, welche als Lösungsvermittler die oben genannten Stoffgruppen in der wässrigen Lösung halten und
- Substanzen mit keimtötender Wirkung.

Ein großes Problem des Offsetdrucks liegt in der unzureichenden Verfügbarkeit des Prozesses, die typisch bei ca. nur 80 % liegt und daher durch hohe Stillstandszeiten sehr investitionsintensiver Druckmaschinen gekennzeichnet ist. Beispielsweise würde man bei einer sog. 64-Seiten Offset-Rotationsdrucklinie pro Jahr ca. 35.000,-- EUR einsparen, wenn die reine Produktionszeit pro Tag durchschnittlich um nur zwei Minuten verlängert werden könnte. Neue, intensive praktische Untersuchungen haben klar gezeigt, dass die zu niedrige Verfügbarkeit von Offset-Druckmaschinen zu einem wesentlichen Teil auf eine undefinierte, unbekannte und bisher nicht im Prozess messbare und daher insbesondere nicht regelbare physikalische und chemische Zusammensetzung der Prozessflüssigkeit zurückzuführen ist. Im Rahmen dieser Untersuchungen wurde insbesondere und paradoxerweise festgestellt, dass selbst bei exakter Realisierung einer vorgegebenen volumetrischen Mischung der Komponenten Wasser und Additiv , z.B. durch eine exakte Steuerung von zwei Dosierpumpen, welche z.B. die Volumina 97 % - Vol. Wasser und 3 % - Vol. Additiv in die Prozessflüssigkeit injizieren, im Kreislauf der Prozessflüssigkeit ein viel niedrigerer Wert, z. B. 0,8 % -Vol. an Additiv, vorhanden ist. Noch viel erstaunlicher ist die Tatsache, dass Analysen ergaben, dass die ursprüngliche prozentuale Zusammensetzung der Einzelkomponenten des Additives im Feuchtwasserkreislauf nicht mit der ursprünglich beabsichtigten und von den Dosierpumpen durch eine Steuerung bei der Einspeisung realisierten Zusammensetzung übereinstimmen. Vielmehr treten von uns als "kannibalistische Effekte" bezeichnete Vorgänge auf, die darin bestehen, dass im Druckprozess die Bestandteile des Additivs mehr oder weniger stark verschwinden, obwohl in den beabsichtigten Konzentrationsverhältnissen periodisch zudosiert wird. Die derzeit standarmäßig im Offsetdruck eingeführte Technik, das Additiv-Konzentrat als eine einzige chemische Formulation, die aus allen notwendigen chemischen Bestandteilen mit definiert vorgegebenen Konzentrationen besteht und deren Zusammensetzung von der Druckapplikation, d.h. Rollenoffset, Bogenoffset oder Zeitungsdruck sowie vom Maschinentyp, Papiertyp, Farbtyp, abhängt, in den Feuchtwasserkreislauf einer Druckmaschine einzuspeisen, ist eine Notlösung, die den modernen Anforderungen an hohe Verfügbarkeit des Offsetproesses nicht gerecht wird. Auch wenn diese Nachteile beim Drucken mit Alkohol durch Zudosierung erhöhter Konzentrationen von Isopropanol zu einem gewissen Teil ausgeglichen werden können, was in der Praxis derzeit so gehandhabt wird, ist diese Vorgehensweise nicht als eine zukünftige technische Lösung zu betrachten, da Isopropanaol als Lösemittel und leicht flüchtiger Stoff (VOC = Volatile Organic Compound) im Offsetdruck in vielen Staaten der USA verboten, in Europa mit strengen Gesetzen zur Emissionbegrenzung und in der Schweiz sogar mit einer für die Wirtschaftlichkeit des Druckprozesses schädlichen Strafsteuer, der sog. "Lenkungsabgabe", belegt ist. Aus umweltpolitischen Gesichtspunkten und insbesondere auch zum Schutze der Gesundheit der Drucker am Arbeitsplatz, müssen daher Isopropanol oder andere Lösemittel in der Zukunft massiv reduziert bzw. letztendlich vollständig aus dem Druckprozess verschwinden. Die Konzentrationen von Alkohol im Feuchtwasser liegen in der Regel derzeit zwischen 6% und 20 % und erleichtern im Falle des Rollen- und des Bogen-Offset den Einsatz von sogenannten Filmfeuchtwerken. Gemäß dem Stand der Technik bestehen letztere aus mehreren mit Gummimischungen und/oder Metallen beschichteten Walzen, die mit einem gewissen Anpressdruck in Kontakt miteinander rotieren und das Feuchtwasser in Form eines Filmes einstellbarer Schichtdicke zur Druckplatte transportieren. Dieser Transportvorgang wird durch die Zugabe von Isopropanol infolge der dadurch bewirkten Reduktion der Oberflächenspannung des Flüssigkeitsfilmes begünstigt. Neben Filmfeuchtwerken gemäß dem Stand der Technik werden auch kontaktlos arbeitende Systeme, insbesondere mit Düsen betriebene Sprühfeuchtwerke oder Feuchtwerke, die Walzen mit Bezügen aus Plüsch aufweisen, eingesetzt. Da in diesen Fällen das Feuchtmittel ohne kontinuierlichen Flüssigkeitsfilm transportiert wird, kann der Einsatz von Alkohol entfallen. Auch bei diesen Ausführungen gemäß dem Stand der Technik ist das erfindungsgemäße neue Verfahren von größter Wichtigkeit, da es eine optimale Zusammensetzung der Chemikalien des Feuchtwassers ermöglicht.

Um den gesetzlichen Zwängen bezüglich der Vermeidung von Isopropanol nachzukommen, wurden insbesondere in den USA andere Lösemittel auf den Markt gebracht. Dieser Weg wurde jedoch in Europa nicht nachvollzogen, da dadurch keine Elemenierung von Lösemitteln erzielt wurde. Ferner gelten die anderen Lösemittel zum Teil als krebserregend bzw. als gesundheitsschädlich und stellen daher keine Alternative zum Alkohol dar.

Eine echte Alternative zum Alkohol sind die sogenannten Tenside, welche vergleichbare Vorteile bezüglich den Benetzungseigenschaften des Feuchtwassers an den Walzen des Feuchtwerkes bewirken. Insbesondere ist festzustellen, dass Tenside keine VOC' s sind .Diese positiven Eigenschaften der Tenside können jedoch erfahrungsgemäß nur dann zum Tragen kommen, wenn die erforderlichen Soll-Konzentrationen exakt eingehalten werden können. Bei den derzeit eingesetzten alkoholfreien Verfahren gemäß dem Stand der Technik, führen daher Tenside zu unerwünschtem Schäumen sowie zu qualitätsminderndem Emulgieren von Farbe und Feuchtwasser, so dass in vielen praktischen Fällen der alkoholfreie Druck versagt und wieder durch das Drucken mit Alkohol abgelöst werden muss. Hinzu kommt die Schwierigkeit, dass Tenside sich in einem chemischen Multikomponentengemisch sehr oft schwierig zu lösen sind, so dass zusätzlich Stoffe als Lösemittelvermittler in das Additiv - Konzentrat eingebracht werden müssen, um eine Entmischung, d.h. ein Absetzen auf dem Boden des Additiv - Fasses des Lieferanten zu verhindern. Auch diese Schwierigkeit wird durch das erfindungsgemäße Verfahren leicht gelöst. Es bietet nämlich die Möglichkeit, nur diejenigen chemischen Stoffkomponenten anzuwenden, die für den Druckprozess absolut notwendig sind. Da die Bahngeschwindigkeiten moderner Druckmaschinen laufend gesteigert werden und letzteres eine zunehmend präzisere Messung und Dosierung der chemischen Einzelkomponenten erfordert, ist das neue Verfahren für den Druck ohne Alkohol unverzichtbar. Unterstützend hinzu kommt, dass bei ein und derselben Druckmaschine, abhängig vom Druckauftrag, d.h. von dem aktuell verwendeten Papier, von den vom spezifischen Kunden verlangten Sonderfarben, von dem speziell verwendeten Gummituch, der Walzenbeschichtung, etc. ,die Zusammensetzung der Einzelkomponenten des Additivs veränderbar sein muss. Auch letzteres ist nur mit dem hier beschriebenen neuen Verfahren möglich. Dies wird insbesondere auch dadurch bewiesen, dass es bis heute kein einziges Additiv auf der Welt gibt, welches Drucken ohne Alkohol unter allen in einer Druckmaschine auftretenden Bedingungen ermöglicht. Letzteres erklärt, weshalb Druckereileiter immer wieder andere Additivformulationen testen wollen, um ihre Druckaufträge durchzuführen. Trotzdem muss festgestellt werden, dass jede chemische Formulierung einen Kompromiss darstellt und daher nur für eine beschränkte Skala von Druckaufträgen optimal ist. Insgesamt ist die derzeitige Vorgehensweise notgedrungen mit einem hohen finanziellen Aufwand verbunden, der trotz der oben genannten gesetzlichen Vorschriften in Europa, den Druck ohne Alkohol de facto unmöglich macht.

Gemäß dem derzeitigen Stand der Technik werden zur Herstellung der Prozessflüssigkeit Dosiereinrichtungen verwendet, die volumetrisch im Rahmen einer Steuerung die zwei bzw. drei Komponenten unter fest vorgegebenen Verhältnissen mischen und in den Flüssigkeitskreislauf der Druckmaschine entsprechend dem jeweiligen Verbrauch, d.h. gemäß dem Ab² transport der Flüssigkeit durch das zu bedruckende Papier, einspeisen. Neben Mischstationen, die von Hand bedient werden, sind derzeit insbesondere Systeme mit herkömmlichen Dosierpumpen im Einsatz. Ein großer Nachteil dieser Systeme besteht darin, dass weder Fehlfunktionen der Mischeinrichtungen noch Änderungen der physikalischen und/oder der chemischen Zusammensetzung, z.B. infolge von chemischen Reaktionen oder von Absorptions- oder Desorptionsprozessen durch die Druckfarbe, das Papier, durch die Rohrleitungs-oder die Maschinenmodule, festgestellt werden können. Insbesondere führen Verdunstungsprozesse bei diesen klassischen Dosierungsverfahren zu erheblichen Konzentrationsfehlern. Die im Moment als einzige Kontrollinstrumente bereits im Einsatz befindlichen Sensoren zur Erfassung der elektrischen Leitfähigkeit sind wegen der starken und schwankenden Verschmutzung der Prozessflüssigkeit für eine quantitative Messung der Konzentration des jeweiligen Additivs bzw. des Ersatzstoffes nicht geeignet. Ferner sind die wichtigen chemischen Leitkomponenten der Additive, welche den Druckprozess ermöglichen, durch eine Leitfähigkeitsmessung nicht erfassbar, da diese Substanzen im Wasser nicht dissoziierbar sind. Auch die mehr oder weniger als Standard im Offsetdruck bereits eingeführte pH-Sonde kann allenfalls als Indikator kurz vor dem Zusammenbruch der Funktion des Druckprozesses herangezogen werden, da die erforderliche starke chemische Pufferung der Prozessflüssigkeit, z.B. durch Zitronensäure, eine Veränderung des pH-Wertes auch bei starker Veränderung der chemischen Zusammensetzung, verhindert.

Aus der DE 19849847 ist eine Vorrichtung zur gezielten Dosierung bzw. Regelung der Isopropanol - Konzentration in Feuchtwasser auf einen vorgegebenen Sollwert bekannt. Die Druckschriften EP 1 010 975 und US 2819402 offenbaren je eine Messzelle zur optischen Untersuchung durchströmender Flüssigkeiten.

Ziel der vorliegenden Erfindung ist daher, durch kontinuierliche Messung und Regelung der Zusammensetzung des Feuchtwassers, d.h. durch kontinuierliche Nachdosierung der einzelnen unterschiedlich verarmenden chemischen Komponenten bzw. ausgewählter Gruppen von Komponenten auf die jeweiligen Soll-Werte nachzuregeln, um die Verfügbarkeit des Offset-Druckprozesses auf Werte des konkurrierenden Tiefdrucks, d.h. auf etwa 90 bis 95 %, zu erhöhen.

Erfindungsgemäß wird die genannte Aufgabe durch das Verfahren nach Anspruch 1 gelöst. Weiterhin sieht die Erfindung zur Lösung der genannten Aufgabe eine gattungsgemäße Vorrichtung nach Anspruch 16 vor.

Erfindungsgemäß werden dabei ein Verfahren sowie eine Vorrichtung in der Drucktechnik verwendet, die aufgrund von selektiver Schwächung elektromagnetischer Strahlung durch die einzelnen Komponenten die Konzentrationen der Einzelkomponenten des Additivs kontinuierlich messen und auf vorgegebene optimale Werte regeln. Dabei wird verhindert, dass die Prozessflüssigkeit insbesondere eine Verarmung aber auch eine Überdosierung von Einzelkomponenten des Additivs erleidet, so dass der Druckprozess bei hoher Stabilität und Verfügbarkeit im optimalen Arbeitspunkt kontinuierlich fortgesetzt werden kann. Von allergrößter erfinderischer Wichtigkeit ist dabei die Tatsache, dass das Verfahren nicht nur beim alkoholfreien Druck ,d.h. für Ersatzstoffe, funktioniert, sondern dass die Selektivität der Messung und Regelung des Additivs auch beim Drucken mit zusätzlicher Beimischung von Alkohol aufrechterhalten werden kann, d.h. dass der Alkohol keine Verfälschung der Messung der Konzentrationen der Einzelkomponenten des Additivs verursacht. Erfindungsgemäß wird die selektive Messung der Konzentrationen der Einzelkomponenten bzw. von Gruppen verschiedener chemischer Verbindungen gekoppelt mit einem Dosiersystem, das die verschiedenen Komponenten aus verschiedenen Behältern über ein aus getakteten Ventilen und Pumpen bestehendes System entnimmt und dem Feuchtwasser geregelt zuführt. Mit diesem neuen Verfahren wird der Offsetdruck mit Alkohol entscheidend optimiert. Der Druck ohne Alkohol wird dadurch erstmals auf eine Basis gestellt, die einen Langzeitprozess unter Erfüllung der Randbedingungen der Wirtschaftlichkeit, ermöglicht. Die Tatsache, dass das neue Verfahren eine individuelle Online-Anpassung des Feuchtwassers an den jeweiligen Druckauftrag, d.h. Papiertyp, Farbtyp, Bahngeschwindigkeit, prinzipbedingte Wechselwirkung zwischen Farbe und Feuchtwasser als Haupteigenschaft des Offsetprozesses, ermöglicht, vermeidet das Entstehen von allgemein bekannten Problemen, wie z.B. unerlaubte Ablagerungen auf dem Gummituch, unerwünschte Farbrückspaltungen in das Feuchtwasser, schädliche chemische Angriffe der Druckplatten, etc. Insbesondere wird das zu schmale Fenster der Variationsmöglichkeiten der Konzentrationen der chemischen Einzelkomponenten von gebrauchsfertig gelieferten Additiven durch das neue Verfahren beliebig erweitert, so dass ständige Feuchtwasserwechsel, insbesondere durch das schon genannte Suchen nach besseren Feuchtwasser-Additiven bei mehrstündigen Stillegungen des Druckprozesses und entsprechend negativen Folgen für die Entsorgung des zuvor betriebenen Feuchtwassers und damit auch für die Wirtschaftlichkeit des Druckprozesses, durch das neue Verfahren entfallen.

Durch die Erfindung wird eine quantitative, kontinuierliche Messung und Regelung der Konzentrationen der Einzelkomponenten des jeweiligen Additivs bzw. des Ersatzstoffes in einer Matrix von bis zu 20 chemischen Komponenten ohne fehlerhafte Beeinflussung durch andere Stoffe, wie z.B. insbesondere durch Alkohole, Schmutz-, Farb- und Papier-Partikel, Gasblasen, Salze aus dem Papierstrich und andere für den Offsetdruck typische Verunreinigungen, ermöglicht. Darüber hinaus können erfindungsgemäß die Einzelkomponenten mit einer stoffabhängigen Genauigkeit zwischen 10 ppm und 3.0 % gemessen und geregelt werden, da die verschiedenen chemischen Inhaltsstoffe einer statisch vorgegebenen Additiv-Mischung nicht konzentrationsproportional verbraucht werden, sich die Mischung im Laufe des Druckprozesses also verändert, da sowohl die Farben, als auch das Papier, als auch andere Effekte eine mehr oder weniger selektive Abreicherung der Einzelkomponenten hervorrufen. Durch die Erfindung werden die insbesondere beim Offsetdruck gegebenen Abreicherungseffekte vollständig ausgeglichen, unabhängig von dem jeweils in der Druckmaschine befindlichen Kundenauftrag. Die vorliegende Erfindung löst die gestellten Aufgaben insbesondere dadurch, dass die chemischen Einzelkomponenten spektrometrisch kontinuierlich gemessen und dem Feuchtmittelkreislauf geregelt als reine Rohstoffe oder/und als Teilmischungen aus mehreren Komponenten in der Regel in Mischungen mit Wasser, so zugeführt werden, dass sie sich einfach im Feuchtwasser lösen und insbesondere keine getrennten Phasen bilden. Auf diese Weise können insbesondere auch chemische Formulierungen realisiert werden, die in einem vorgefertigten Additiv-Konzentrat sich abtrennen und daher nicht zu einer homogenen Lösung führen würden. Für die Konzentrationsbestimmungen wird erfindungsgemäß die Schwächung elektromagnetischer Strahlung beim Durchgang durch das Feuchtwasser ausgenutzt.

Während grundsätzlich zu messende Komponenten im Infrarotbereich erfasst werden können, ist in bevorzugter Ausgestaltung vorgesehen, dass zu messende Komponenten im Ultraviolettbereich erfasst werden. Es hat sich herausgestellt, dass im UV-Bereich ein in der Druck-Prozessflüssigkeit freigegebener Alkoholanteil hinsichtlich der Bestimmung der Additiv-Konzentration keinerlei Störeinfluss ausübt.

Weiter hat sich gezeigt, dass zwar, wie dargelegt, grundsätzlich die Komponenten aufgrund des Druckvorganges ihre Konzentration in der Prozessflüssigkeit unterschiedlich verändern bzw. ein unterschiedlicher Schwund eintritt. Es ist aber auch so, dass einzelne Komponenten im Wesentlichen in gleicher prozentualer Weise schwanken. Insofern kann zur Vereinfachung des Verfahrens und der erfindungsgemäßen Vorrichtung in bevorzugter Ausgestaltung vorgesehen sein, dass aufgrund der spektroskopischen Messung von Komponenten lediglich die Ist-Konzentration eines Teils der gemessenen Komponenten bestimmt wird, wobei vorrichtungsmäßig eine Konzentrationsbestimmungseinheit, die insbesondere im Rahmen eines Rechners ausgeführt ist, derart ausgebildet ist, dass lediglich die Konzentration eines Teils der Komponenten bestimmbar ist.

Aus eben dem vorgenannten Grund kann in weiterer bevorzugter Ausgestaltung eben für eine Untergruppe von Komponenten, die in gleicher Weise im Druckprozess schwinden, vorgesehen sein, dass für diese Untergruppe der Komponenten die Ist-Konzentration mindestens einer repräsentativen Komponente bestimmt und die Komponenten der Untergruppe gemeinsam nachdosiert werden. Dies kann selbst wiederum in verschiedener Weise geschehen, so können die einzelnen Komponenten sämtlich separat vorliegen, so dass die Dosierelemente für die genannte Untergruppe der Komponenten lediglich ein einheitliches, durch die vorstehend beschriebene Messung bestimmtes Dosiersignal erhalten. Alternativ kann eine Untergruppe von Komponenten der Additive auch als Teilmischung in einem Dosierbehälter vorliegen und als solche aufgrund des von der Konzentrationsbestimmung der repräsentativen Komponente abgeleiteten Dosierungssignals zudosiert werden. Hierzu ist die erfindungsgemäße Vorrichtung ausgebildet durch eine Steuerungseinrichtung zum Nachdosieren einer Untergruppe der Komponenten aufgrund der Bestimmung der Konzentration mindestens einer Komponente der Untergruppe.

Es gibt auch die Situation, dass in einer Teilgruppe von Komponenten deren Konzentration zwar in ähnlicher, aber nicht in genau der gleichen Weise schwindet, so dass es in gewissen Situationen für gewisse Teilgruppen sinnvoll sein kann, nicht als repräsentative Messung die Messung der Ist-Konzentration einer bestimmten Komponente vorzunehmen, sondern die Konzentrationen sämtlicher Komponenten der Teilgruppe oder aber einer bestimmten Auswahl der Komponenten der Teilgruppe zu bestimmen und ein gewichtetes Mittel des Schwundes der Konzentration zu bestimmen oder aber zunächst den Einzelvergleich zwischen Ist-Konzentration und Soll-Konzentration der einzelnen Komponenten vorzunehmen und danach ein Mittel des Schwundes zu bestimmen und dieses als Steuersignal zum Züdosieren, insbesondere einer Mischung der Komponenten der genannten Teilgruppe vorzunehmen. Demgemäß sieht eine bevorzugte Ausgestaltung der Erfindung vor, dass für eine Teilgruppe von Komponenten aus Einzelmessungen der Komponenten die nachzudosierende Menge einer die Komponenten enthaltenden Mischung bestimmt und die Teilgruppe der Komponenten als Mischung nachdosiert wird, wobei die Vorrichtung erfindungsgemäß ausgebildet ist durch eine Einrichtung zum Bestimmen einer nachzudosierenden Menge einer eine Teilgruppe von Komponenten enthaltenden Mischung aufgrund von Einzelmessungen der Komponenten und zum Nachdosieren der Teilgruppe der Komponenten als Mischung.

Die Einzelspektren der Komponenten werden aus dem gemessenen Gesamtspektrum durch herkömmliche mathematische Verfahren bestimmt, wie z.B. durch die Methode der kleinsten Quadrate (PLS = Partial Least Square Algorithm). Zur Kalibrierung werden zunächst Proben der einzelnen Komponenten für verschiedene Komponenten spektrometrisch erfasst; es lässt sich eine Kalibrationsfunktion (für jede Komponente) bestimmen, über die sich bei späterer Messung ein betrieblicher Einsatz aus der gemessenen Extinktion die Konzentration der jeweiligen Komponenten bestimmen lässt. Hieraus lässt sich eine Gruppenkonzentration für Gruppen von Einzelkomponenten oder auch die Gesamtkonzentration eines aus mehreren Einzelkomponenten bestehendes Additivs bestimmen, welches im Rahmen des erfindungsgemäßen Verfahrens auch als solches insgesamt nachdosiert werden kann.

Alternativ zu letzterem kann als Ist-Größe das Maximum der Summe aller Teilspektren aller Komponenten erfasst werden. In vorteilhafter Ausgestaltung kann vorgesehen sein, dass das Integral des erfassten Summen-Spektrums bestimmt und als Maß für die Gesamtkonzentration der Additive weiterverarbeitet wird.

Erfindungsgemäß wird zur Spektralanalyse die Prozessflüssigkeit durch einen Strömungskanal geleitet, in dem der Messprozess stattfindet, um eine kontinuierliche Messung zu ermöglichen. Insbesondere ist dabei vorgesehen, dass elektromagnetische Strahlung durch die Prozessflüssigkeit in orthogonaler Richtung zur Strömungsoberfläche geleitet wird. Zu diesem Zweck weist die Messeinrichtung mindestens eine Probenkammer zur Wechselwirkung der Prozessflüssigkeit mit elektromagnetischer Strahlung auf, wobei die Probenkammer einen Strömungskanal aufweist, durch den die Prozessflüssigkeit geleitet wird und wobei der Strahlengang der elektromagnetischen Strahlung orthogonal zur Strömungsoberfläche der Prozessflüssigkeit gebildet ist. Erfindungsgemäß ist der Strömungskanal im Zentralbereich in Strömungsrichtung sich verjüngend ausgebildet, wodurch eine Erhöhung der Strömungsgeschwindigkeit erzielt wird und Schmutzablagerungen in der Probenkammer vermieden werden. In höchst bevorzugter Ausführung ist der Strömungskanal in Form einer Laval-Düse ausgebildet, mit einem kleinsten Düsenquerschnitt zwischen 0,5 mm und 3 mm.

Erfindungsgemäß kann insbesondere das Absorptionsspektrum der zu messenden Komponenten in der Prozessflüssigkeit erfasst werden.

Die Erfindung wird im Folgenden detailliert mittels Figuren beschrieben. Dabei zeigt:
- Fig. 1a: UV-Spektren einer Druck-Prozessflüssigkeit mit Additiv als frischer Ansatz nach einer gewissen Betriebszeit;
- Fig. 1b: ein Differenzspektrum der beiden Spektren der Fig. 1a;
- Fig. 2: das Gesamtsystem, bestehend aus Mess- und Regelsystemen, Druckmaschine und Prozessflüssigkeitskreislauf, wobei die Dosierung der verschiedenen chemischen Komponenten/Komponentengruppen direkt durch das Mess- und Regelgerät erfolgt;
- Fig. 3: eine schematische Darstellung des erfindungsgemäßen Messsystems;
- Fig. 4a: eine bevorzugte Ausführung der erfindungsgemäßen Probenkammer in perspektivischer Vorderansicht;
- Fig. 4b: die in Fig. 4a gezeigte erfindungsgemäße Probenkammer in perspektivischer Rückansicht;
- Fig. 4c: einen Ausschnitt aus der in Fig. 4b gezeigten erfindungsgemäßen Probenkammer;
- Fig. 4d: einen Ausschnitt aus der in Fig. 4a gezeigten erfindungsgemäßen Probenkammer;
- Fig. 4e: die in den Fig. 4a und Fig. 4b gezeigte erfindungsgemäße Probenkammer in einer Seitenansicht;
- Fig. 5: eine alternative Ausbildung der Erfindung, wobei die Dosierung über eine Venturi-Düse stattfindet;
- Fig. 6: eine alternative Ausbildung der Erfindung, die dadurch gekennzeichnet ist, dass die chemischen Einzelkomponenten über einen statischen Mischer geführt werden;
- Fig. 7: eine weitere Systemvariante, bei welcher eine Voranmischung in einem separaten Behälter stattfindet, welcher mit dem Gesamtsystem verbunden ist, wobei die Zusammensetzung dem optimalen Mischungsverhältnis entspricht; und
- Fig. 8: System, bei welchem die optimale Zusammensetzung über kalibrierte Dosierpumpen erfolgt.

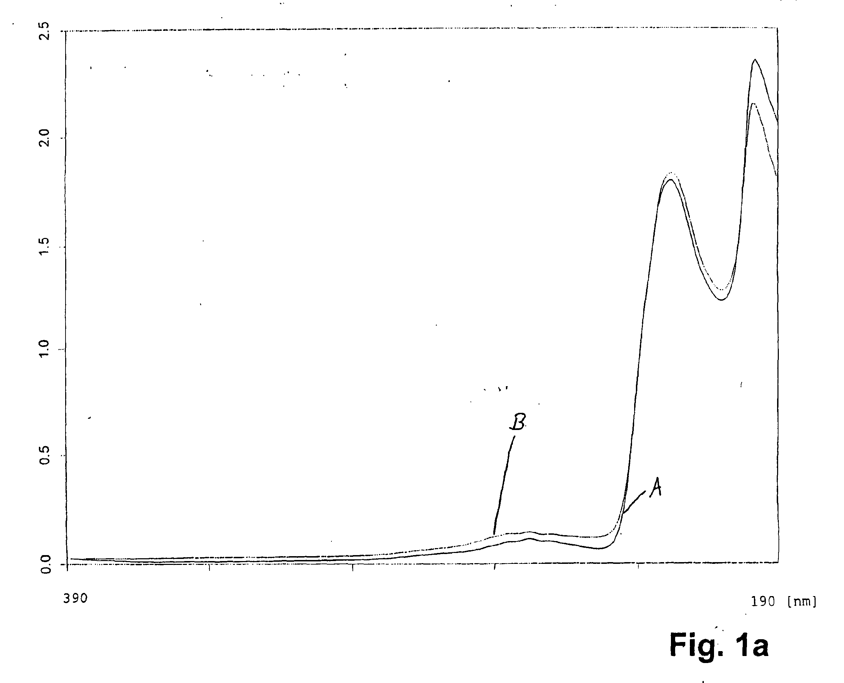

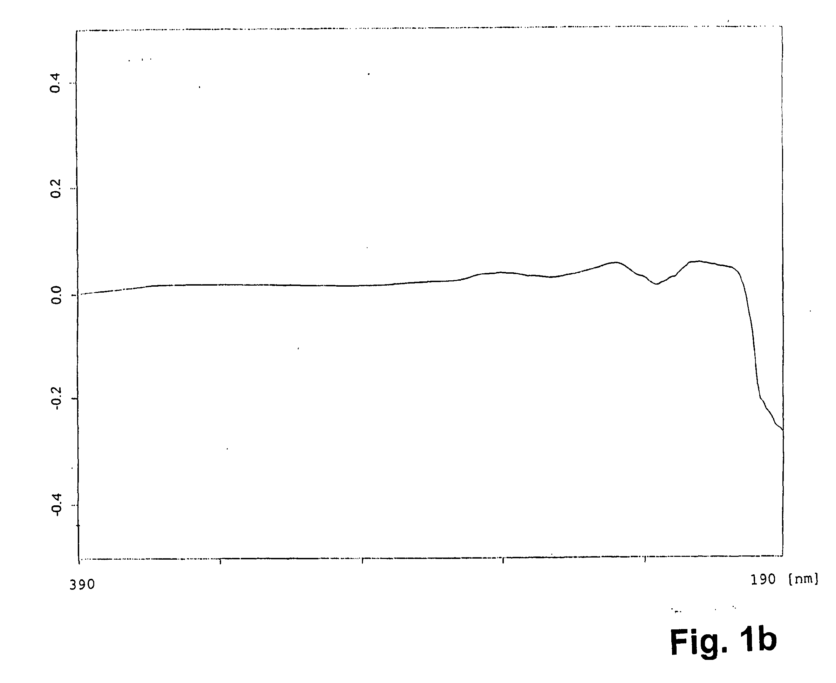

Die Fig. 1 zeigt beispielhaft ein UV-Spektrum einer mit Additiv versehener Druck-Prozessflüssigkeit als frischer Ansatz - Spektrum A - und nach einer gewissen Betriebszeit - Spektrum B. Es zeigt sich insbesondere aus Fig. 1b, dass sowohl eine Anreicherung - Spektrum über O.O -als auch eine Verarmung - starker Abfall unter O.O im Bereich nahe 190 nm - je nach Komponente stattfinden kann. Dies liegt daran, dass einzelne Komponenten beim Druckprozess von der Papierbahn an die Prozessflüssigkeit abgegeben werden, während andere in unterschiedlicher Weise durch die Papierbahn aus der Prozessflüssigkeit aufgesaugt werden können.

Aus dem Spektrum der Fig. 1a kann mit herkömmlichen Methoden, wie der Methode der kleinsten Quadrate, die Konzentration der Einzelkomponenten bestimmt werden.

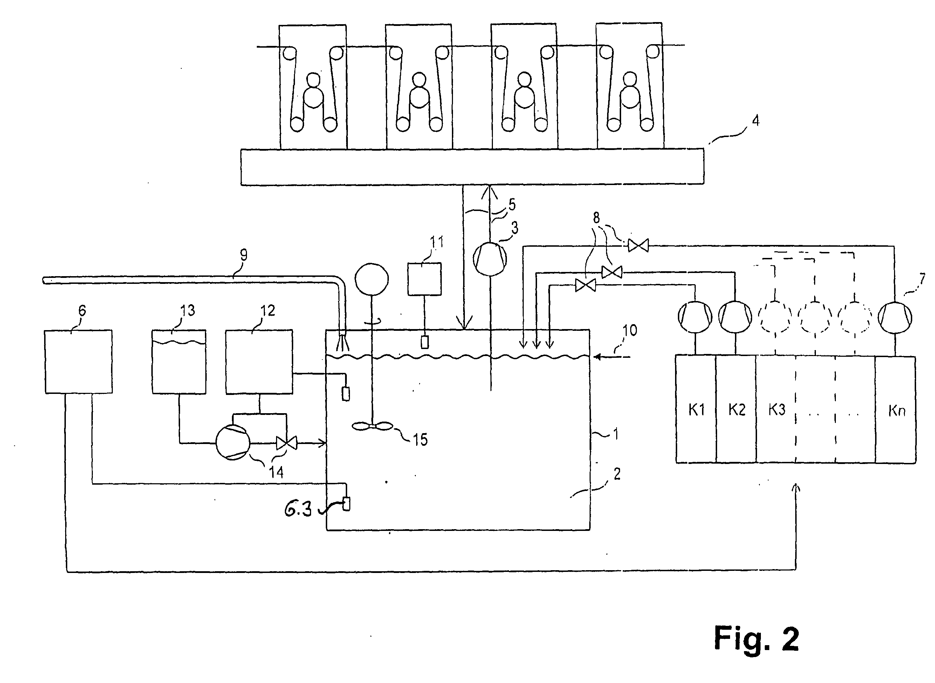

Die gemäß Fig. 2 in einem Tank (1) befindliche Prozessflüssigkeit (2) wird durch Umwälzpumpen (3) zur Druckmaschine (4) und zurück zum Tank (1) über Rohrleitungen (5) im Kreislauf geführt. Die jeweiligen Konzentrationen der chemischen Einzelkomponenten des Additivs werden von einem Messsystem (6) kontinuierlich gemessen . Die vorgegebenen chemischen Komponenten K1, K2, K3,.... bis Kn werden über Pumpen (7) sowie über Ventile (8) in die Prozessflüssigkeit (2) eingespeist. Die jeweils erforderlichen verschiedenen Soll-Konzentrationen der chemischen Komponenten K1 bis Kn werden dadurch garantiert, dass das Messsystem (6) die Ist-Konzentrationen kontinuierlich misst und im Rahmen einer Regelung von der jeweiligen Komponente so viel nachdosiert, dass der Ist-Wert gleich dem vorgegebenen Soll-Wert ist. Dadurch ist gewährleistet, dass die durch den Druckprozess ständig verbrauchten oder durch chemische Reaktionen oder physikalische Absorptionsprozesse an den Wänden der Drucklinie entzogenen Additiv-Komponenten in die Prozessflüssigkeit (2) nachgespeist werden, so dass unabhängig von der Stärke der jeweiligen Verlustprozesse die Ist-Werte der Konzentration des Additivs gleich den vom Drucker vorgegebenen Soll-Werten sind. Der Wasserverlust in der Prozessflüssigkeit (2) wird über eine Rohrleitung (9) ausgeglichen, wobei die Füllhöhe (10) über ein Niveau- Mess- und Regel-System (11) nach dem Ultraschall-Echolot-Prinzip oder einem Verfahren gemäß dem Stand der Technik konstant gehalten wird. Mit einer weiteren Mess- und Regeleinrichtung (12), die in einer anderen Ausbildung der Erfindung auch im Messsystem (6) integriert sein kann, wird kontinuierlich die Konzentration des Alkohols, sofern nicht alkoholfrei gedruckt wird, in der Prozessflüssigkeit (2) gemessen und der im Wesentlichen durch Verdunstung verlorene Alkohol aus einem Vorratsbehälter (13) über eine Einheit bestehend aus Ventil und Dosierpumpe (14) eingespeist, so dass auch im Falle des Druckens mit Alkohol Soll- und Ist-Wert ständig übereinstimmen und die Verfügbarkeit und Qualität des Druckprozesses gewährleistet sind. Zur Homogenisierung der Prozessflüssigkeit wird ein Rührwerk (15) eingesetzt.

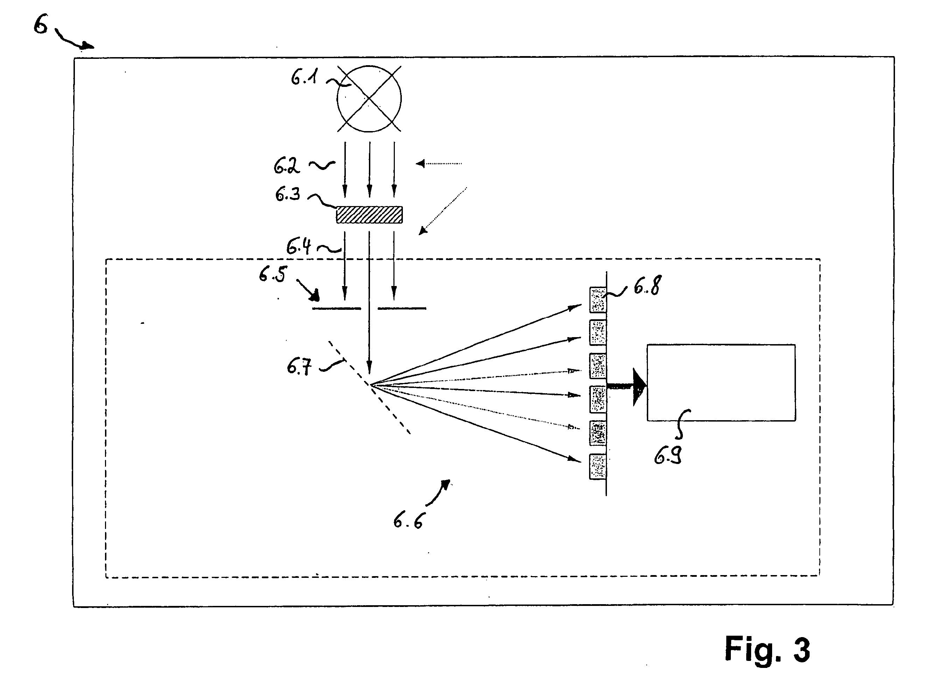

Eine erfindungsgemäße Messeinrichtung (6) ist schematisch in der Fig. 3 dargestellt. Die erfindungsgemäße Messeinrichtung (6) weist zunächst eine Beleuchtungseinheit (6.1) in Form einer Lampe auf, die bei IR-Spektroskopie eine Infrarotlampe, bei UV-Spektroskopie eine UV-Lampe ist. Von der Beleuchtungseinheit (6.1) führt ein Lichtweg (6.2) beispielsweise in Form einer Glasfaser, die bei UV-Spektroskopie auch zur Leitung von UV-Licht geeignet ist, zu einer Probenkammer (6.3). Es kann sich dabei um eine Probenkammer im Vorratsbehälter (1) oder aber ein transparentes Rohrstück in der vom Vorratsbehälter (1) zur Druckmaschine führenden Leitung (5) handeln. Vom der Probenkammer (6.3) führt wiederum ein Lichtweg (6.4), ebenfalls in Form von Glasfasern, zu einer optischen Anordnung (6.5), die insbesondere einen Spalt aufweist. Im dargestellten Ausführungsbeispiel handelt es sich um ein Gitterspektrometer (6.6) mit einem optischen Gitter (6.7), dem eine Empfängeranordnung (6.8) im dargestellten Ausführungsbeispiel in Form einer Diodenzeile zugeordnet ist. Statt eines Gitterspektrometers kann grundsätzlich auch ein Prismenspektrometer eingesetzt werden.

Die von der Empfängereinheit (6.8) opto-elektronisch gewandelten Signale werden einer Elektrodeneinheit (6.9) zugeführt. Diese beinhaltet neben einem Rechner eine Regeleinheit zum Vergleich von Ist- und Soll-Konzentrationen, eine Bestimmungseinrichtung zur Bestimmung der nachzudosierenden Mengen der Komponenten sowie einer Steuerungseinrichtung zum Nachdosieren der jeweiligen Komponenten.

Mittels des Spektrometers werden die einzelnen Komponenten der Additive in der Prozessflüssigkeit erfasst, wobei durch eine Eichung aufgrund des erhaltenen Spektrums die Konzentrationen der Komponenten bestimmt werden können. Diese werden ebenfalls in der Elektronik mit den Soll-Konzentrationen der Komponenten verglichen, woraufhin bei Abweichung die innerhalb einer Zeiteinheit nachzudosierende Menge der Komponenten bestimmt und anschließend eine Nachdosierung der nachzudosierenden Komponenten vorgenommen wird. Dies kann zunächst derart geschehen, dass die Komponenten, wie dies in den Figuren dargestellt ist, jeweils in Einzel-Komponentenbehältern (K1, K2...) vorliegen und aus diesen einzeln in der unter Bezug auf die Figuren 1, 3 bis 7 beschriebenen Weise in den Vorratsbehälter (1) dosiert werden.

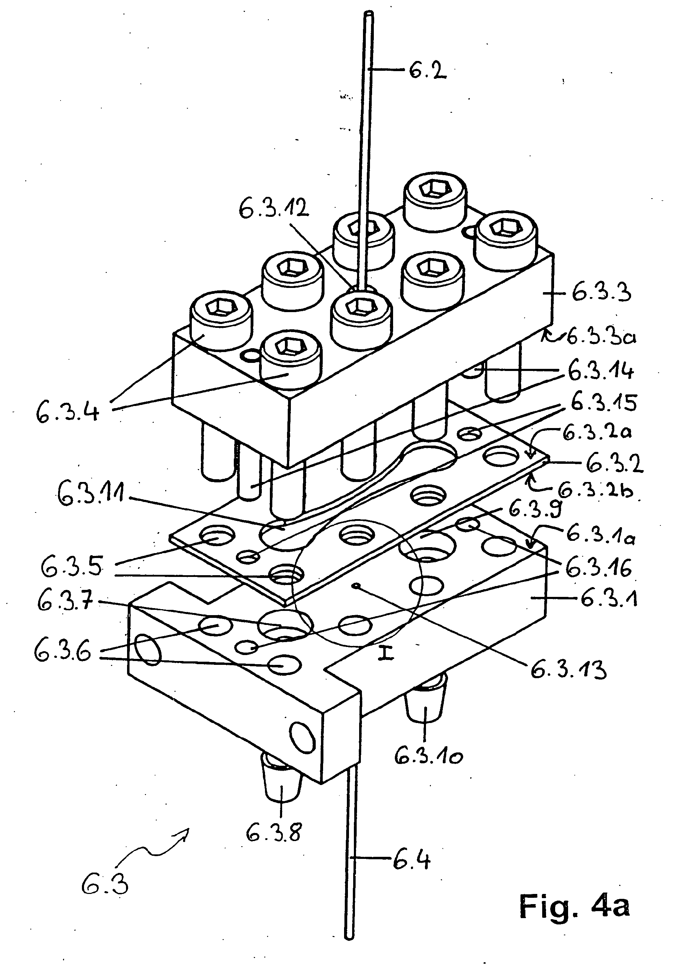

Die Fig. 4a zeigt eine bevorzugte Ausführung der erfindungsgemäßen Probenkammer (6.3) in perspektivischer Explosionsdarstellung. Sie weist ein Trägerelement (6.3.1), ein Zwischenelement (6.3.2) und ein Deckelelement (6.3.3) auf. In betriebsbereitem Zustand der Probenkammer (6.3) sind diese drei Bestandteile mittels der hierfür auf dem Deckelelement (6.3.3) vorgesehenen Gewindeschrauben (6.3.4), sowie den zugeordneten im Trägerelement (6.3.1) vorgesehenen Gewindelöchern (6.3.6) und den im Zwischenelement (6.3.2) angeordneten Durchgangslöchern (6.3.5) derart fest miteinander verschraubt, dass die Innenfläche (6.3.3a) des Deckelelements (6.3.3) und die Innenfläche (6.3.1a) des Trägerelements (6.3.1) mit jeweils einer Außenfläche (6.3.2a) und (6.3.2b) des Zwischenelements (6.3.2) flächendeckend eine flüssigkeitsdichte Verbindung aufweist. Hierzu ist das Zwischenelement (6.3.2) bevorzugt aus Hart-PVC gebildet und die jeweils paarweise miteinander in Berührung tretenden Flächen (6.3.1a) und (6.3.2a) sowie (6.3.2a) und (6.3.2.b) sind bevorzugt durch Polieren geglättet. Um eine flächendeckende kraftschlüssige Verbindung zwischen den jeweiligen kontaktierten Flächen zu erzielen, sind in bevorzugter Ausführung zumindest acht Gewindeschrauben (6.3.4) und jeweils zumindest acht zugeordnete Gewindelöcher (6.3.6) im Trägerelement (6.3.1), sowie zumindest acht zugeordnete Durchgangslöcher (6.3.5) im Zwischenelement (6.3.2) angeordnet. Alternativ können auch die Durchgangslöcher (6.3.5) mit einem den Gewindeschrauben (6.3.4) entsprechenden formschlüssigen Gewinde ausgebildet sein.

Zum Zuführen der Prozessflüssigkeit (2) in die Probenkammer (6.3) weist das Trägerelement (6.3.1) eine Einlassbohrung (6.3.7) auf, in welche über ein innen rohrförmig ausgebildetes Anschlusselement (6.3.8), beispielsweise durch eine angeschlossene Schlauchleitung (nicht gezeigt) oder durch Direktzufuhr, die Prozessflüssigkeit (2) zugeführt wird. Zum Abführen der zugeführten Prozessflüssigkeit (2) nach dem Messvorgang ist eine Auslassbohrung (6.3.9) mit einem weiteren rückseitig angeordneten Anschlusselement (6.3.10) für beispielsweise eine Schlauchleitung (nicht gezeigt) im Trägerelement (6.3.1) ausgebildet.

Die eigentliche Messkammer (6.3.11) der Probenkammer (6.3) ist durch das Zwischenelement (6.3.2) gebildet, welches hierzu einen endseitig jeweils auf Höhe der Einlassbohrung (6.3.7) bzw. der Auslassbohrung (6.3.9) angeordneten und dem jeweiligen Bohrungsumfang (6.3.7) und (6.3.9) angepassten Durchbruch (6.3.11) aufweist, der als Strömungskanal zwischen zu- und abgeführter Prozessflüssigkeit (2) dient.

In der Erfindung weist der Durchbruch (6.3.11) im Zentralbereich eine Verjüngung auf. In bevorzugter Ausführung weist die Breite des so gebildeten Strömungskanals im Austrittsbereich der Prozessflüssigkeit (2) aus der Einlassbohrung (6.3.7) in Strömungsrichtung zunächst einen konvergenten Teil mit einem Minimalwert im Mittelpunkt und einem sich anschließenden divergenten Teil bis zum Eintreten in die Auslassbohrung (6.3.9) auf.

Erfindungsgemäß erfolgt die Ein- bzw. Auskopplung des Lichtstrahls orthogonal zu den Strömungsoberflächen. Hierzu sind im Deckelelement (6.3.3) und im Trägerelement (6.3.1) jeweils eine weitere Bohrung (6.3.12) und (6.3.13) vorgesehen, durch welche jeweils ein Lichtleiter (6.2) und (6.4) zur Einspeisung bzw. zur Abführung des Messstrahls flächenbündig mit der Innenfläche (6.3.3a) bzw. (6.3.1a) angeordnet ist, so dass dieser an die obere bzw. untere Strömungsoberfläche angrenzt. Die optische Weglänge der Messung ist somit durch die Dicke des Zwischenelements (6.3.2) gebildet, welche in bevorzugter Ausführung in einem Bereich zwischen 0,7 mm und 5 mm liegt. In bevorzugter Ausführung sind die Bohrungen (6.3.12) und (6.3.13) derart angeordnet, dass der Strahlengang des Messstrahls durch das Zentrum des durch den Durchbruch (6.3.11) definierten Strömungskanals verlauft.

Zur genauen Adjustierung des Strahlengangs bei der Ein- bzw. Auskopplung des Messstrahls durch die Lichtleiter (6.2) bzw. (6.4) ist bei der Herstellung der Probenkammer (6.3) vorgesehen, dass die Bohrungen (6.3.12) und (6.3.13) in verschraubtem Zustand der drei Bestandteile (6.3.1), (6.3.2) und (6.3.3) in einem Bohrvorgang gefertigt werden. Zur Fixierung des Strahlengangs weist das Deckelelement (6.3.3) bevorzugt mindestens zwei Fixierungsstifte (6.3.14) auf, die in jeweils im Zwischenelement (6.3.2) und im Trägerelement (6.3.1) angeordnete Bohrungen (6.3.15) und (6.3.16) eingeführt sind, wobei auch diese Bohrungen (6.3.15) und (6.3.16) im verschraubten Zustand der Probenkammer (6.3) gefertigt sind.

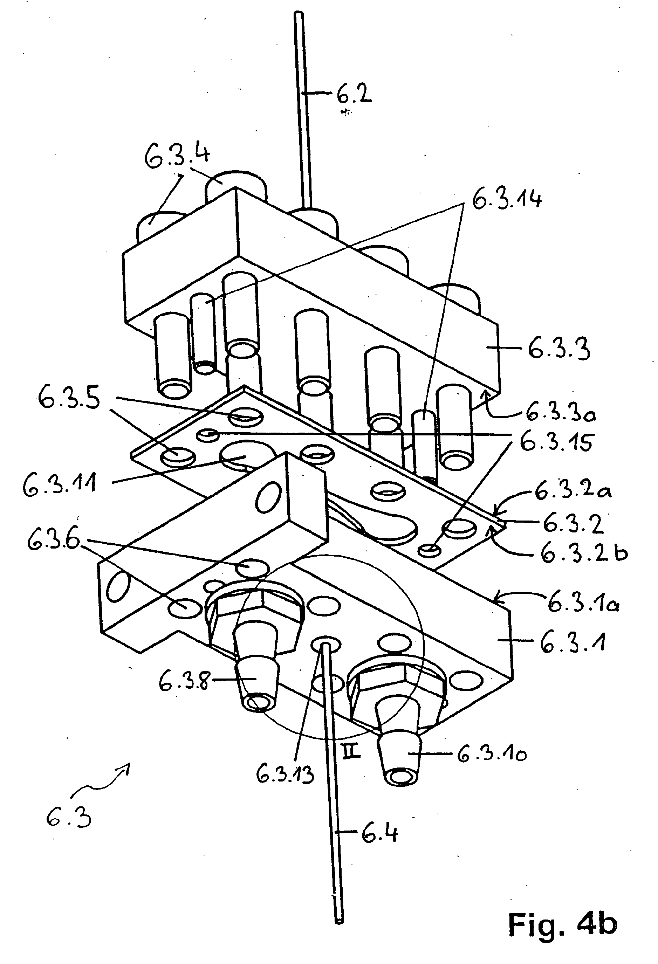

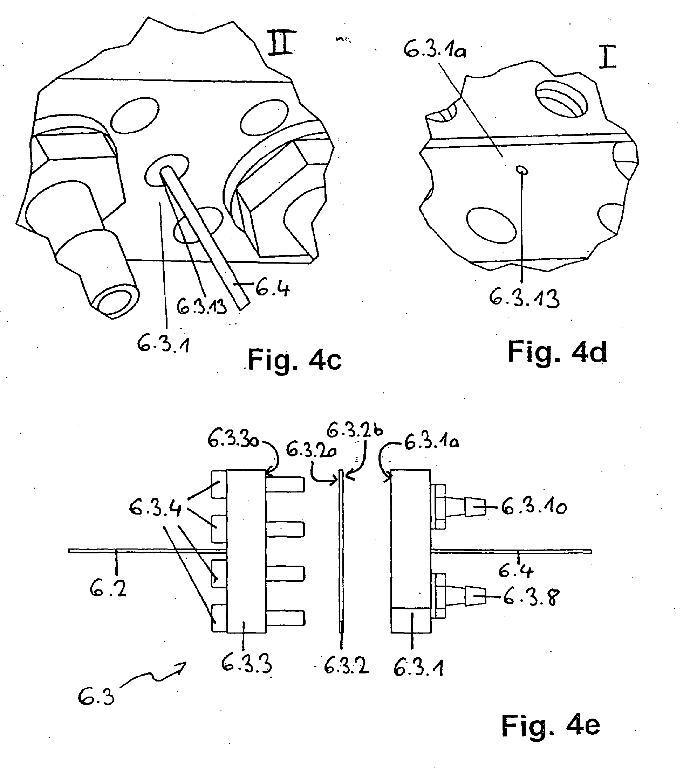

Zur weiteren Veranschaulichung der einzelnen Bestandteile der Probenkammer (6.3) ist diese in Fig. 4b bzw. Fig. 4e in einer perspektivischen Rückansicht bzw. in einer Seitenansicht dargestellt. Die Fig. 4c bzw. Fig. 4d zeigen einen Detailausschnitt (I) bzw. (II) aus Fig. 4b bzw. Fig. 4a, um die Fixierung des Lichtleiters (6.4) im Trägerelement (6.3.1) näher zu erläutern. Nach der Fertigung der Bohrung (6.3.13) wird der Lichtleiter (6.4) in diese eingeführt, bis er endseitig an der Innenfläche (6.3.1a) angrenzt oder ein wenig darüber hinausragt, worauf eine Fixierung desselben mittels eines Spezialklebers erfolgt, wodurch zusätzlich erreicht wird, dass die Bohrung (6.3.13) flüssigkeitsdicht verschlossen ist. Nach Aushärtung des Spezialklebers wird der Lichtleiter (6.4) flächenbündig zur Innenfläche (6.3.1a) plangeschliffen. Zur Fixierung des Lichtleiters (6.2) im Deckelelement (6.3.3) ist ein analoger Verfahrensschritt vorgesehen.

Alternativ hierzu können die eingangs beschriebenen Variationen sowohl hinsichtlich der Messung und Erfassung der einzelnen Komponenten als auch hinsichtlich der Dosierung, wie eben der Erfassung der Konzentration einer repräsentativen Komponente für eine Untermenge von Komponenten und/oder der Zumischung in den Vorratsbehältern einer als Mischung vorliegenden Untergruppe von Komponenten vorgenommen werden.

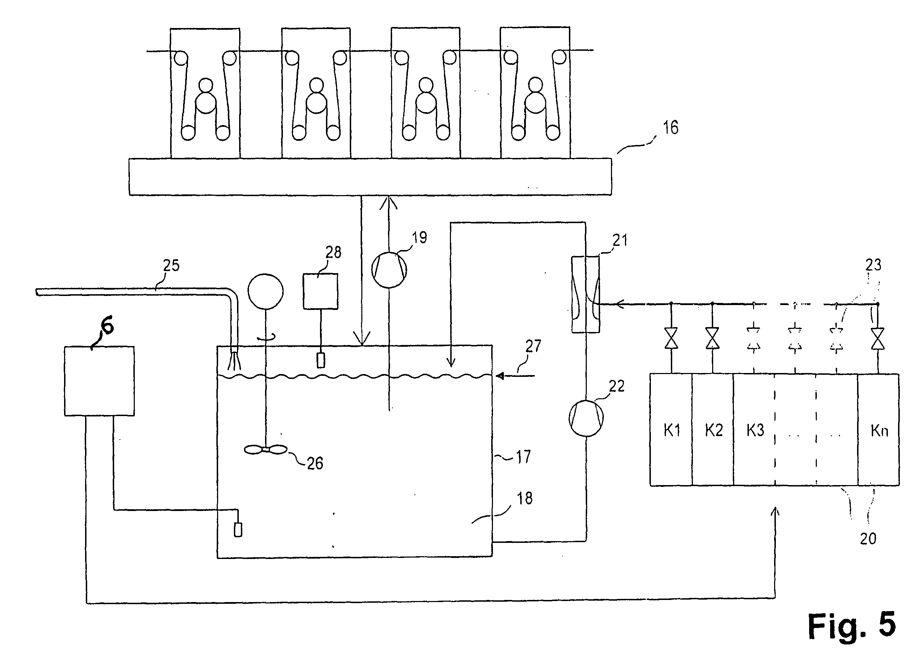

Fig. 5 skizziert die erfindungsgemäße Anordnung bestehend aus Druckmaschine (16), Feuchtwassertank (17), Feuchtwasser (18) mit Zirkulation (19) sowie den chemischen Komponenten K1 bis Kn (20), welche über eine Venturi-Düse (21), und über eine Pumpe (22) betrieben wird, die chemischen Komponenten K1 bis Kn über Ventile (23) ansaugt und in das Feuchtwasser (18) einspeist, wobei die Messung der Konzentrationen der chemischen Komponenten über das Mess- und Regelsystem (6) erfolgt. Die Nachspeisung (25) von Wasser mit automatischer Niveauregulierung sowie das Rührwerk (26) entsprechen den Anordnungen von Fig. 2.

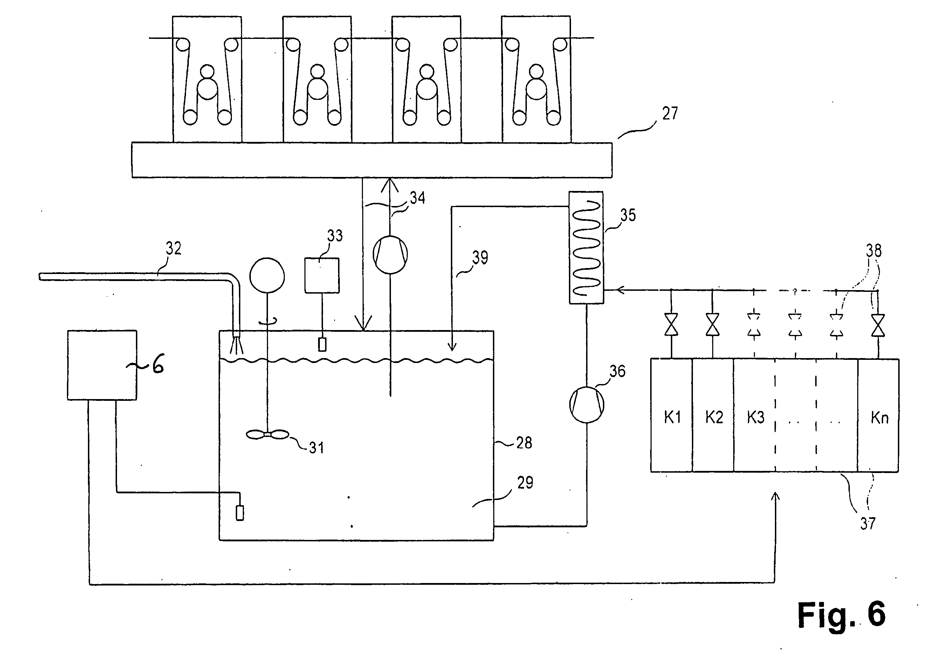

In Fig. 6 ist in der Gesamtanordnung bestehend aus Druckmaschine (27), Feuchtwassertank (28), Feuchtwasser (29), Mess- und Regelsystem (6), Rührwerk (31), Wassereinspeisung (32) mit Füllhöhenkontrolle (33) und Feuchtwasserzirkulation (34), als zusätzliche Komponente ein statischer Mischer (35) realisiert. Das über die Pumpe (36) im Kreislauf geführte Feuchtwasser (29) wird mit den chemischen Komponenten K1 bis Kn (37), die über die Ventile (38) in den Kreislauf (39) eingespeist werden im statischen Mischer (35) durchmischt, so dass sowohl das Messsystem (30) als auch der Kreislauf (34) homogene Flüssigkeitsgemische aufweisen mit dem Ziel, dass das Gesamtsystem in Fig. 6 optimal funktioniert.

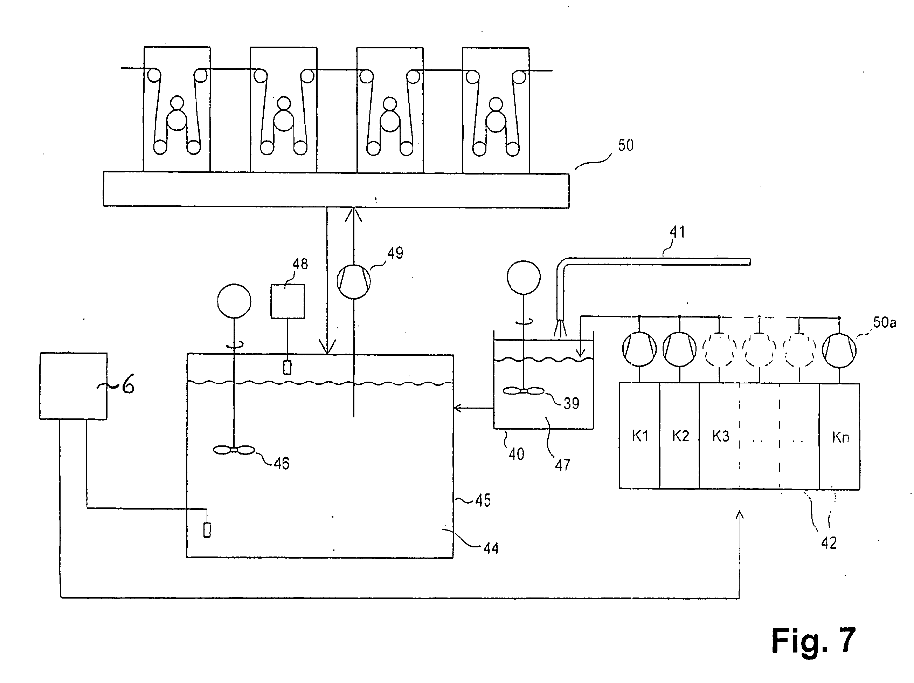

Fig. 7 stellt eine gegenüber den vorausgehenden Figuren veränderte Version der Erfindung dar, die durch eine Voranmischung der chemischen Komponenten K1 bis Kn (42) über Pumpen (50a) mit einer Wasserzufuhr (41) in einem Mischbehälter (40) gekennzeichnet ist. Durch diese Anordnung wird erreicht, dass der Regelprozess des Messsystems (6) zur jeweiligen Erreichung der Sollkonzentrationen der chemischen Komponenten K1 bis Kn (42) entscheidend verkürzt wird, so dass die Zusammensetzung des Feuchtwassers (44) im Feuchtwassertank (45) auch über kürzere Zeitintervalle immer die vorgegebenen Soll-Werte aufweist. Ferner wird analog zu dem Rührwerk (46) im Feuchtwassertank auch im Vormischbehälter (40) eine Homogenisierungseinrichtung (39) verwendet. Letztere kann auch gemäß Fig. 6 ein statischer Mischer sein. Um bei der Einspeisung der vorgemischten Flüssigkeit (47) in den Feuchtwassertank (45) eventuelle Füllstandsprobleme zu vermeiden, ist der Einsatz eines Sensors (48), vorzugsweise nach dem Ultraschall-Echolot-Prinzip, von großer Bedeutung. Die Umwälzung (49) des Feuchtwassers (44) über die Pumpe (49) zur Druckmaschine (50) erfolgt analog zu der in den Figuren 2 bis 6.

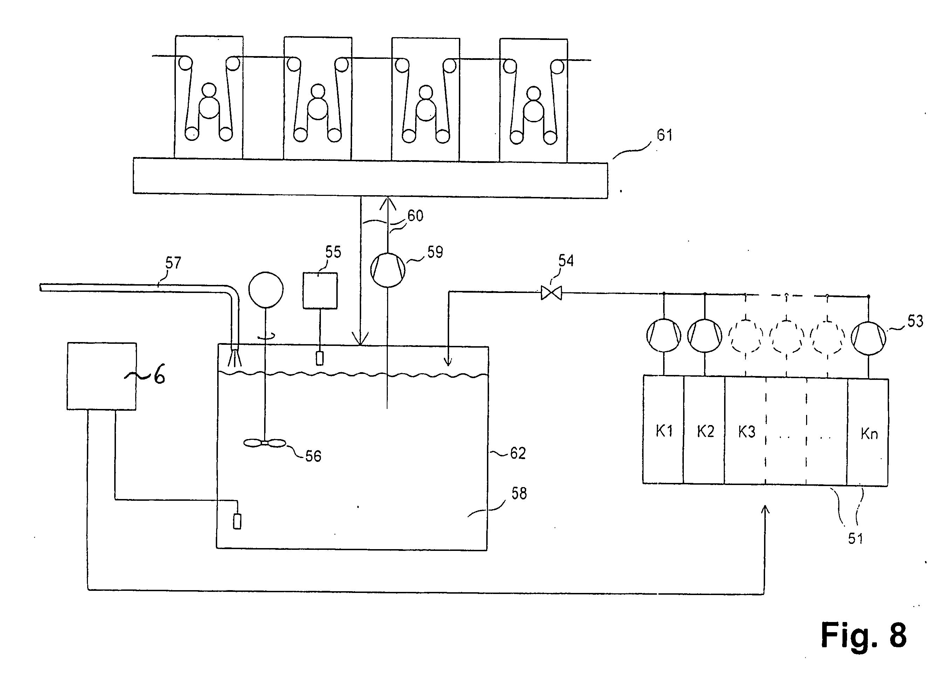

Fig. 8 zeigt die einfachste Variante gemäß der Erfindung, in welcher die chemischen Komponenten K1 bis Kn (51) über vom Messsystem (6) geregelte, kalibrierte Dosierpumpen (53) gemäß dem jeweiligen Soll-Wert der Einzelkomponente über ein Ventil (54) zudosiert werden. Die Füllstandsmessung (55) und das Rührwerk (56) ermöglichen in Kombination mit der Wasserzufuhr (57) eine homogene Mischung des Feuchtwassers (58), welches über die Umwälzpumpe (59) im Kreislauf (60) zwischen Druckmaschine (61) und Feuchtwasserkühlgerät (62) zirkuliert.

## Patentansprüche

1. Verfahren zum Regeln der Gesamtkonzentration oder der Konzentrationen von Komponenten von Additiven in einer Druck-Prozessflüssigkeit, wobei die Ist-Konzentrationen von Komponenten bestimmt werden und ein Nachdosieren von gemessenen Komponenten auf vorgegebene Soll-Konzentrationen erfolgt, wobei die zu messende Komponenten spektroskopisch erfasst werden, und die Druck-Prozessflüssigkeit durch einen Strömungskanal geleitet wird, **dadurch gekennzeichnet, dass** die elektromagnetische Strahlung die Prozessflüssigkeit in orthogonaler Richtung zur Strömungsoberfläche durchdringt, wobei der Strömungskanal durch ein ebenes Zwischenelement, dessen Dicke die optische Weglänge bestimmt, gebildet wird, und der Strömungskanal im Zentralbereich in Strömungsrichtung sich in der Ebene des Zwischenelements verjüngt, sodass durch Erhöhung der Strömungsgeschwindigkeit Schmutzablagerungen im Strömungskanal vermieden werden.

2. Verfahren nach Anspruch 1, **dadurch gekennzeichnet, dass** zu messende Komponenten im Infrarotbereich erfasst werden.

3. Verfahren nach Anspruch 1 oder 2, **dadurch gekennzeichnet, dass** zu messende Komponenten im Ultraviolettbereich erfasst werden.

4. Verfahren nach einem der vorangehenden Ansprüche, **dadurch gekennzeichnet, dass** aufgrund der spektroskopischen Messung von Komponenten lediglich die Ist-Konzentration eines Teils der gemessenen Komponenten bestimmt wird.

5. Verfahren nach einem der vorangehenden Ansprüche, **dadurch gekennzeichnet, dass** lediglich ein Teil der gemessenen Komponenten nachdosiert wird.

6. Verfahren nach einem der vorangehenden Ansprüche, **dadurch gekennzeichnet, dass** zumindest für eine Untergruppe von Komponenten die Ist-Konzentration mindestens einer repräsentativen Komponente bestimmt und die Komponenten der Untergruppe gemeinsam nachdosiert werden.

7. Verfahren nach,einem der vorangehenden Ansprüche, **dadurch gekennzeichnet, dass** zumindest für eine Teilgruppe von Komponenten aus Einzelmessungen der Komponenten die nachzudosierende Menge einer die Komponenten enthaltenden Mischung bestimmt und die Teilgruppe der Komponenten als Mischung nachdosiert wird.

8. Verfahren nach einem der Ansprüche 1 bis 3, **dadurch gekennzeichnet, dass** das Integral des erfassten Summen-Spektrums bestimmt und als Maß für die Gesamtkonzentration der Additive weiterverarbeitet wird.

9. Verfahren nach einem der vorangehenden Ansprüche **dadurch gekennzeichnet, dass** sich die verschiedenen chemischen Komponenten in einzelnen Behältern befinden und die Nachdosierung über ein Messsystem erfolgt, welches die Konzentrationen der Einzelkomponenten oder von Gruppen derselben kontinuierlich misst und die Nachdosierung der Einzelkomponenten über eine Regelschleife vornimmt.

10. Verfahren nach einem der vorangehenden Ansprüche, **dadurch gekennzeichnet, dass** die Nachdosierung der chemischen Einzelkomponenten/Gruppen aus den Einzelbehältern über Pumpen erfolgt, die mit je einem Ventil in Serie geschaltet sind.

11. Verfahren nach einem der Ansprüche 1 bis 9, **dadurch gekennzeichnet, dass** die Ansaugung der Einzelkomponenten /Gruppen in den Feuchtwasserkreislauf mit einer Bernouilli-Düse erfolgt.

12. Verfahren nach einem der vorangehenden Ansprüche, **dadurch gekennzeichnet, dass** die Durchmischung von Feuchtwasser und Einzelkomponenten/Gruppen durch einen statischen Mischer optimiert wird.

13. Verfahren nach einem der Ansprüche 1 bis 10, **dadurch gekennzeichnet, dass** die chemischen Einzelkomponenten/Gruppen in einem Vormischbehälter mit Wasser vorgemischt werden und dass der Flüssigkeitsinhalt des Vormischbehälters in den Feuchtwasserbehälter überführt wird.

14. Verfahren nach einem der Ansprüche 1 bis 9, **dadurch gekennzeichnet, dass** die chemischen Einzelkomponenten/Gruppen aus jedem Behälter über jeweils eine Pumpe, denen ein gemeinsames Ventil vorgeschaltet ist, dosiert werden.

15. Verfahren nach einem der Ansprüche 1 bis 14, **dadurch gekennzeichnet, dass** ein Absorptionsspektrum der Prozessflüssigkeit gemessen wird.

16. Vorrichtung zum Regeln der Gesamtkonzentration oder der Konzentrationen von Komponenten von Additiven in einer Druck-Prozessflüssigkeit mit einer Messeinrichtung zum Messen der Konzentrationen zum mindestens eines Teils der Komponenten in der Prozessflüssigkeit, mit einem Regelkreis und mit einer Einrichtung zum Nachdosieren zumindest eines Teils der Komponenten, wobei die Messeinrichtung (6) mindestens ein Spektrometer (6.6) aufweist und eine Messkammer aufweist, welche die Druck - Prozessflüssigkeit durch einen Strömungskanal leitet **dadurch gekennzeichnet, dass** die Messkammer die zur Spektroskopischen Messung dienende elektromagnetische Strahlung in orthogonaler Richtung zur Strömungsoberfläche die Druck - Prozessflüssigkeit durchdringen lässt, wobei der Strömungskanal durch ein ebenes Zwischenelement gebildet ist, dessen Dicke die optische Weglänge bestimmt, und wobei der Strömungskanal im Zentralbereich in Strömungsrichtung sich in der Ebene des Zwischenelements verjüngt, so dass durch Erhöhung der Strömungsgeschwindigkeit Schmutzablagerungen im Strömungskanal vermieden werden.

17. Vorrichtung nach Anspruch 16, **dadurch gekennzeichnet, dass** die Messeinrichtung (6) ein Infrarotspektrometer (6.6) aufweist.

18. Vorrichtung nach Anspruch 16 oder 17, **dadurch gekennzeichnet, dass** die Messeinrichtung (6) ein Ultraviolett-Spektrometer (6.6) aufweist.

19. Vorrichtung nach einem der Ansprüche 16 bis 18, **gekennzeichnet durch** eine Steuerungseinrichtung zum Nachdosieren einer Untergruppe der Komponenten aufgrund der Bestimmung der Konzentration mindestens einer Komponente der Untergruppe.

20. Vorrichtung nach einem der Ansprüche 16, bis 19 **gekennzeichnet durch** eine Einrichtung zum Bestimmen einer nachdosierenden Menge einer eine Teilgruppe von Komponenten enthaltenden Mischung aufgrund von Einzelmessungen der Komponenten und zum Nachdosieren der Teilgruppe der Komponenten als Mischung.

21. Vorrichtung nach einem der Ansprüche 16 bis 20, **dadurch gekennzeichnet, dass** als Pumpe eine Bernouilli-Düse (21) verwendet wird, welche durch einen Teilstrom des Feuchtwassers (18) betrieben und das durch eine Pumpe (22) umgewälzt wird.

22. Vorrichtung nach einem der Ansprüche 16 bis 21, **dadurch gekennzeichnet, dass** die chemischen Komponenten K1 bis Kn durch einen statischen Mischer (35) mit dem Feuchtwasser (29) in einem Kreislauf (39), der durch eine Pumpe (38) angetrieben wird, homogen miteinander vermischt werden.

23. Vorrichtung nach einem der Ansprüche 18 bis 22, **dadurch gekennzeichnet, dass** die chemischen Einzelkomponenten K1 bis Kn in einem Vormischbehälter (40) mit Wasser aus einer Wasserleitung (41) über Pumpen (50a) angesetzt werden und das Gemisch (47) anschließend dem Hauptbehälter (44) zugeführt wird.

24. Vorrichtung nach einem der Ansprüche 16 bis 20, **dadurch gekennzeichnet, dass** die chemischen Einzelkomponenten K1 bis Kn über jeweils eine Pumpe (53), welcher ein Ventil (54) vorgeschaltet ist, in das Feuchtwasser (58) dosiert werden.

25. Vorrichtung nach einem der Ansprüche 16 bis 24, **dadurch gekennzeichnet, dass** eine zweite Mess- und Regeleinheit (12), welche die Konzentration von Alkohol im Feuchtwasser (2,18,29,44,58) kontinuierlich misst und den verbrauchten Alkohol aus einem Alkoholreservoir (13) über eine Pumpe (14) mit vorgeschaltetem Ventil nachdosiert, vorgesehen ist.

26. Vorrichtung nach Anspruch 16, **dadurch gekennzeichnet, dass** der Strömungskanal (6.3.11) in Form einer Laval-Düse ausgebildet ist.

## Claims

1. Method for controlling the overall concentration or the concentrations of additive components and additives in a printing process fluid in which the actual concentrations of components are determined and then re-dosed to ensure the measured components correspond with setpoint values. At this time the measured components are identified by means of a spectrometer and the printing process fluid is fed into a flow duct. The method is **characterised by** electromagnetic radiation that penetrates the printing process fluid and moves in a perpendicular direction toward the surface of this fluid. The flow duct is designed with an intermediate element plane whose thickness defines the optical path length. The centre area of the flow duct narrows in the plane of the intermediate element in the direction of flow. This prevents sediment from accumulating in the flow duct when the flow speed is increased.

2. Method according to claim 1 **characterised in that** the measured components are identified in the infrared range.

3. Method according to claim 1 or 2 **characterised in that** the measured components are identified in the ultraviolet range.

4. Method according to one of the preceding claims **characterised in that** only the actual concentration of part of the measured components is determined based on the spectroscopic measurement.

5. Method according to one of the preceding claims **characterised in that** only part of the measured components is re-dosed.

6. Method according to one of the preceding claims **characterised in that** the actual concentration of at least one representative component of at least one subgroup of components is determined and the components of the subgroup are re-dosed together.

7. Method according to one of the preceding claims **characterised in that** the re-dosing amount of one of the components contained in the mixture for at least one partial group of individually measured components is determined and the partial group of the components is re-dosed as a mixture.

8. Method according to one of the claims 1 to 3 **characterised in that** the integral of the measured spectrum-sum is determined and processed as dosage for the overall concentration of the additive.

9. Method according to one of the preceding claims **characterised in that** the different chemical components are stored in separate tanks and that re-dosing is carried out via a measuring system which continuously measures the concentration of individual components or groups of components and then re-doses via a feedback loop.

10. Method according to one of the preceding claims **characterised in that** the re-dosing of the separate chemical components/groups from the separate tanks is carried out using pumps connected by means of a set of consecutive valves.

11. Method according to one of the claims 1 to 9 **characterised in that** the feed of the separate components/groups in the dampening solution circuit is carried out with a Venturi nozzle.

12. Method according to one of the preceding claims **characterised in that** the mixture of dampening solution and separate components/groups is optimised with a static mixer.

13. Method according to one of the claims 1 to 10 **characterised in that** the separate chemical components/groups are premixed with water in a premixing tank and that the fluid content of the premixing tank is transferred to the dampening solution tank.

14. Method according to one of the claims 1 to 9 **characterised in that** the separate chemical components/groups are dosed from each tank via separate pumps connected by means of a common upstream valve.

15. Method according to one of the claims 1 to 14 **characterised in that** an absorption spectrum of the process fluid is measured.

16. Apparatus for controlling the overall concentration of components from additives in a printing process fluid with a measuring system for measuring the concentration of at least one part of the components in the process fluid consisting of a control circuit and a system for re-dosing at least one part of the components in which the measuring system (6) has at least one spectrometer (6.6) and one measuring chamber which feeds the printing process fluid through a flow duct. The apparatus is **characterised by** the measuring chamber that allows electromagnetic radiation used for the spectroscopic measurement to penetrate the printing process fluid and move in a perpendicular direction toward the surface of this fluid. The flow duct is designed with an intermediate element plane whose thickness defines the optical path length. The centre area of the flow duct narrows in the plane of the intermediate element in the direction of flow. This prevents sediment from accumulating in the flow duct when the flow speed is increased.

17. Apparatus according to claim 16 **characterised in that** the measuring system (6) has an infrared spectrometer (6.6).

18. Apparatus according to claim 16 or 17 **characterised in that** the measuring system (6) has an ultraviolet spectrometer (6.6).

19. Apparatus according to one of the claims 16 to 18 **characterised by** a control system for re-dosing a subgroup of the components based on the concentration determined for at least one of the subgroup's components.

20. Apparatus according to one of the claims 16 to 19 **characterised by** a system used to determines the re-dosing amount of mixture contained in a partial group of components based on individual measurements of the components and for re-dosing the partial group of components as a mixture.

21. Apparatus according to one of the claims 16 to 20 **characterised in that** a Venturi nozzle (21) is used as a pump and through which a partial stream of the dampening solution (18) is transported and circulated by the pump (22).

22. Apparatus according to one of the claims 16 to 21 **characterised by** a static mixer (35) that homogenously mixes the chemical components K1 to Kn together with dampening solution (29) in a circuit (39) operated by a pump (38).

23. Apparatus according to one of the claims 16 to 22 **characterised in that** the individual chemical components K1 to Kn are added via pumps (50a) to a premixing tank (40) with water from a water pipe (41) after which the resulting mixture (47) is fed to a main tank (44).

24. Apparatus according to one of the claims 16 to 20 **characterised in that** the individual chemical components K1 to Kn are dosed into the dampening solution (58) via individual pumps (53), each of which is connected by an upstream valve (54).

25. Apparatus according to one of the claims 16 to 24 **characterised in that** a second measuring or control unit (12) is provided that continuously measures the concentration of alcohol in the dampening solution (2,18,29,44,58) and re-doses consumed alcohol from an alcohol reservoir (13) via a pump (14) with an upstream valve.

26. Apparatus according to claim 16 **characterised in that** the flow duct (6.3.11) is shaped in the form of a Laval nozzle.

## Revendications

1. Procédé de régulation de la concentration totale ou des concentrations des composants d'agents additifs dans un fluide de procédé d'impression, les concentrations réelles des composants étant déterminées et les composants mesurés étant redosés pour atteindre les concentrations prescrites données, les composants à mesurer étant captés par spectroscopie et le fluide de procédé d'impression étant canalisé dans un conduit d'écoulement, **caractérisé en ce que** le rayonnement électromagnétique pénètre dans le fluide de procédé perpendiculairement à la surface d'écoulement, le conduit d'écoulement étant formé par un élément intermédiaire plan dont l'épaisseur détermine la longueur du trajet optique, et le conduit d'écoulement se rétrécissant dans la zone centrale au niveau de l'élément intermédiaire dans le sens d'écoulement, de sorte que l'augmentation de la vitesse d'écoulement évite la formation de dépôts d'impuretés dans le conduit d'écoulement.

2. Procédé selon la revendication 1, **caractérisé en ce que** les composants à mesurer sont captés dans l'infrarouge.

3. Procédé selon la revendication 1 ou 2, **caractérisé en ce que** les composants à mesurer sont captés dans l'ultraviolet.

4. Procédé selon l'une des revendications précédentes, **caractérisé en ce que**, en raison de la mesure spectroscopique des composants, seule la concentration réelle d'une partie des composants mesurés est déterminée.

5. Procédé selon l'une des revendications précédentes, **caractérisé en ce que** seule une partie des composants mesurés est redosée.

6. Procédé selon l'une des revendications précédentes, **caractérisé en ce que** pour au moins un sous-groupe de composants, la concentration réelle d'au moins un composant représentatif est déterminée et **en ce que** les composants du sous-groupe sont redosés ensemble.

7. Procédé selon l'une des revendications précédentes, **caractérisé en ce que** pour au moins un groupe partiel de composants, la quantité à redoser d'un mélange contenant les composants est déterminée à partir de mesures individuelles des composants et **en ce que** le groupe partiel de composants est redosé en tant que mélange.

8. Procédé selon l'une des revendications 1 à 3, **caractérisé en ce que** l'intégrale du spectre somme capté est déterminée et transformée pour servir de mesure pour la concentration totale des agents additifs.

9. Procédé selon l'une des revendications précédentes, **caractérisé en ce que** les différents composants chimiques se trouvent dans des réservoirs séparés et **en ce que** le redosage se fait par un système de mesure qui mesure en continu les concentrations d'éléments ou de groupes de ceux-ci et procède au redosage des éléments au moyen d'une boucle de régulation.

10. Procédé selon l'une des revendications précédentes, **caractérisé en ce que** le redosage des éléments/groupes chimiques à partir des réservoirs séparés se fait par des pompes dont chacune est connectée en série à une soupape.

11. Procédé selon l'une des revendications 1 à 9, **caractérisé en ce que** l'aspiration des éléments/groupes dans le circuit de solution de mouillage se fait par une tuyère de Venturi.

12. Procédé selon l'une des revendications précédentes, **caractérisé en ce que** le mélange de la solution de mouillage et des éléments/groupes est optimisé par un mélangeur statique.

13. Procédé selon l'une des revendications 1 à 10, **caractérisé en ce que** les éléments/groupes chimiques sont prémélangés à de l'eau dans un réservoir de prémélange et **en ce que** le liquide contenu dans le réservoir de prémélange est transféré dans le réservoir de solution de mouillage.

14. Procédé selon l'une des revendications 1 à 9, **caractérisé en ce que** les éléments/groupes chimiques sont dosés à partir de chaque réservoir au moyen d'une pompe respective, une soupape commune étant montée en amont.

15. Procédé selon l'une des revendications 1 à 14, **caractérisé en ce qu'**un spectre d'absorption du fluide de procédé est mesuré.

16. Dispositif de régulation de la concentration totale ou de la concentration de composants d'agents additifs dans un fluide de procédé d'impression, muni d'un dispositif de mesure pour mesurer les concentrations d'au moins une partie des composants dans le fluide de procédé, muni d'un circuit de régulation et muni d'un dispositif pour redoser au moins une partie des composants, le dispositif de mesure (6) présentant au moins un spectromètre (6.6) et une chambre de mesure qui canalise le fluide de procédé d'impression dans un conduit d'écoulement, **caractérisé en ce que** la chambre de mesure fait pénétrer le rayonnement électromagnétique servant à la mesure spectroscopique dans le fluide de procédé d'impression perpendiculairement à la surface d'écoulement, le conduit d'écoulement étant formé par un élément intermédiaire plan dont l'épaisseur détermine la longueur du trajet optique, et le conduit d'écoulement se rétrécissant dans la zone centrale au niveau de l'élément intermédiaire dans le sens d'écoulement, de sorte que l'augmentation de la vitesse d'écoulement évite la formation de dépôts d'impuretés dans le conduit d'écoulement.

17. Dispositif selon la revendication 16, **caractérisé en ce que** le dispositif de mesure (6) présente un spectromètre à infrarouge (6.6).

18. Dispositif selon la revendication 16 ou 17, **caractérisé en ce que** le dispositif de mesure (6) présente un spectromètre à ultraviolet(6.6).

19. Dispositif selon l'une des revendications 16 à 18, **caractérisé par** un dispositif de commande destiné à redoser un sous-groupe de composants sur la base de la détermination de la concentration d'au moins un composant du sous-groupe.

20. Dispositif selon l'une des revendications 16 à 19, **caractérisé par** un dispositif destiné à déterminer une quantité de redosage d'un mélange comprenant un groupe partiel de composants sur la base de mesures individuelles des composants et à redoser le groupe partiel de composants en tant que mélange.

21. Dispositif selon l'une des revendications 16 à 20, **caractérisé en ce qu'**une tuyère de Venturi (21) est utilisée comme pompe et entraînée par un courant partiel de la solution de mouillage (18) qui recircule au moyen d'une pompe (22).

22. Dispositif selon l'une des revendications 16 à 21, **caractérisé en ce que** les composants chimiques K1 à Kn sont mélangés de manière homogène par un mélangeur statique (35) à la solution de mouillage (29) dans un circuit (39) entraîné par une pompe (38).

23. Dispositif selon l'une des revendications 16 à 22, **caractérisé en ce que** les éléments chimiques K1 à Kn sont additionnés dans un réservoir de prémélange (40) d'eau prélevée par des pompes (50a) dans une conduite d'eau (41) et **en ce que** le mélange (47) est ensuite amené dans le réservoir principal (44).

24. Dispositif selon l'une des revendications 16 à 20, **caractérisé en ce que** les éléments chimiques K1 à Kn sont dosés dans la solution de mouillage (58) au moyen d'une pompe respective (53) en amont de laquelle est montée une soupape (54).

25. Dispositif selon l'une des revendications 16 à 24, **caractérisé en ce qu'**il est prévu un deuxième module de mesure et de régulation (12) qui mesure en continu la concentration d'alcool dans la solution de mouillage (2, 18,29,44,58) et redose l'alcool consommé en le prélevant dans un réservoir d'alcool (13) au moyen d'une pompe (14) en amont de laquelle est montée une soupape.

26. Dispositif selon la revendication 16, **caractérisé en ce que** le conduit d'écoulement (6.3.11) a la forme d'une tuyère de Laval.
